# EUROPEAN PATENT SPECIFICATION

(11) **EP 3 839 614 B1**
(45) Date of publication and mention of the grant of the patent: **02.12.2026**
(21) Application number: 19306741.0
(22) Date of filing: 20.12.2019
(51) Int. Cl.: G02C 7/10, G02C 7/12

(54) **OPHTHALMIC DEVICE HAVING ADJUSTABLE FILTERING PROPERTIES**
OPHTHALMISCHE VORRICHTUNG MIT EINSTELLBAREN FILTEREIGENSCHAFTEN
DISPOSITIF OPHTALMIQUE DOTÉ DE PROPRIÉTÉS DE FILTRAGE AJUSTABLES

(43) Date of publication of application: 23.06.2021
(73) Proprietor: ESSILOR INTERNATIONAL, 94220 Charenton-Le-Pont (FR)
(72) Inventor: MARCK, Christelle, 94220 Charenton-Le-Pont (FR); ROPTIN, Vincent, 94220 Charenton-Le-Pont (FR); JOUARD, Ludovic, 94220 Charenton-Le-Pont (FR)
(74) Representative: Santarelli

(56) References cited:
- WO-A1-2021/106244
- KR-A- 20090 083 840
- US-A- 4 119 369
- US-A- 4 202 601
- US-A- 5 663 779
- US-A1- 2016 026 007
- US-A1- 2017 045 659
- US-A1- 2018 017 780
- NEWPORT CORPORATION: "Technology and Applications Center Newport Corporation Principle of Operation", 1 January 2006 (2006-01-01), XP055701134, Retrieved from the Internet <URL:https://web.archive.org/web/20170302012150if_/http://www.spectra-physics.com/assets/client_files/files/documents/Var_Attenuator_for_Lasers_AS.pdf> [retrieved on 20200604]
- "Basic Polarization Techniques and Devices", 1 January 2005, MEADOWLARK OPTICS, article MEADOWLARK OPTICS: "Basic Polarization Techniques and Devices", XP055700813

## Description

### FIELD OF THE INVENTION

The invention relates to ophthalmic devices having adjustable filtering properties, such as filtering properties with respect to a polarized beam of light.

### BACKGROUND ART

American patent application US 2018/0017780 discloses an ophthalmic device provided with a colour changeable optical filter which is configured so that hue or Chroma of the light transmitted through the optical filter can be changed.

In an embodiment, the filter includes two polarizers, one of which being rotatable for changing hue or Chroma of the light transmitted through the optical filter.

In another embodiment, the colour changeable optical filter includes two polarizing films and a liquid crystal polarization rotator interposed between the polarizing films. The liquid crystal polarization rotator has two states which depends on the supplying or not of a voltage thereto. When no voltage is supplied to the liquid crystal polarization rotator, a polarization plane of light at the output of one of the two polarizing film is rotated (active state); while when the voltage is supplied to the liquid crystal polarization rotator, the polarization plane of light at the output of the polarizing film is not rotated (inactive state). In the active state, the rotation of the polarization plane allows changing hue or Chroma of the light transmitted through the optical filter; while in the inactive state, hue or Chroma are not changed.

Other ophthalmic devices of the prior art are disclosed in US4119369A and US2017/045659A1.

### SUMMARY OF THE INVENTION

The invention is directed to an ophthalmic device having adjustable filtering properties, such as filtering properties for a polarized component of a polarized beam of light, which is improved and optimized and which is further convenient, simple, economic and easy to manufacture.

The invention accordingly provides an ophthalmic device having adjustable filtering properties, comprising at least one polarizer and at least one half-wave plate that is rotatable with respect to said polarizer to thereby adjust said filtering properties for a polarized beam of light that successively meets said half-wave plate and then said polarizer.

By rotating the half-wave plate, it is possible to adjust the angle between the polarization plane of the polarized beam of light at the input of the polarizer and the polarization axis of the polarizer. The polarizer then cuts, or in other words filters, the polarized beam of light depending on this angle.

Therefore, by rotating the half-wave plate it is possible to adjust the filtering properties of the ophthalmic device with respect to the polarized beam of light.

Furthermore, when the half-wave plate is rotated by a predetermined angle, the polarization plane of the polarized beam of light passing through the half-wave plate is rotated by twice this predetermined angle.

Accordingly, the range of angles of rotation needed for the half-wave plate may be half the range of angles desired between the polarization plane of light and the polarization axis of the polarizer.

The polarized beam of light may comprise a non-polarized component (i.e. a randomly polarized component) and a polarized component having the polarization plane. Such a polarized beam of light may for instance result from a beam of sunlight reflected by a snow-covered surface in the environment of a user of the ophthalmic device.

It should be noted that thanks to the combination of the half wave plate and the polarizer as recited above, the ophthalmic device of the invention is able to filter only the polarized component and substantially not the non-polarized component; whereas such non-polarized component can be polarized by the polarizer. Therefore, by rotating the half-wave plate the polarized component will be more or less cut from the polarized beam of light but the non-polarized component will substantially not be cut, so that the overall transmittance of the ophthalmic device with respect to the polarized beam of light will substantially not change by rotating the half-wave plate.

According to the invention, the half-wave plate is mechanically actuated. The mechanical nature of the rotating movement of the half-wave plate with respect to the polarizer provides a sturdy and simple ophthalmic device.

More generally, it should be noted that the assembly formed by the half-wave plate and the polarizer of the ophthalmic device behaves with respect to the polarized beam of light like a virtual polarizer of which the polarization axis would be rotatable with respect to the polarization plane of this polarized beam of light.

According to further advantageous and convenient features said polarizer is rotatable with respect to said half-wave plate.

By rotating the polarizer, it is possible to further adjust the angle between the polarization plane of the polarized beam of light at the input of the polarizer and the polarization axis of the polarizer.

When the polarizer is rotated by a predetermined angle, the angle between the polarization plane of the polarized beam of light at the input of the polarizer and the polarization axis of the polarizer is reduced or enhanced depending of this predetermined angle.

Therefore, by rotating the polarizer it is possible to twice more finely adjust the filtering properties of the ophthalmic device with respect to the polarized beam of light than with the half-wave plate.

According to the invention, the polarizer is mechanically actuated. The mechanical nature of the rotating movement of the polarizer with respect to the half-wave plate provides a sturdy and simple ophthalmic device.

According to further advantageous and convenient features:
- said half-wave plate can be rotated at least on a range of angles of 45°;
- said range of angles of 45° is from 0° to 45° or from 90° to 45° between a fast axis of said half-wave plate and a polarization axis of said polarizer;
- said filtering properties include a transmittance of said ophthalmic device with respect to a polarized component of said polarized beam of light, said transmittance being adjustable on a predetermined range;
- said ophthalmic device comprises at least one ophthalmic lens on which is fixed, or which is integrally formed with, said polarizer;
- said at least one ophthalmic lens has corrective optical properties;
- said ophthalmic device comprises at least a frame in which is fixedly mounted said polarizer and in which is rotationally mounted said half-wave plate;
- said frame has a conventional wearing position and the polarization axis of said polarizer is oriented generally vertically when said frame is in said conventional wearing position;
- said frame is a spectacle frame having two bearing portions into each of which is at least partially mounted one said polarizer and one said half-wave plate;
- said spectacle frame comprises a synchronization member connected to said two bearing portions and configured such that a rotating movement of said half-wave plate in a first of said bearing portions is replicated by said half-wave plate in a second of said bearing portions, and reciprocally;
- said ophthalmic device comprises at least another polarizer which is fixed relative to said polarizer and that is positioned such that said half-wave plate is located between said polarizer and said another polarizer;
- a polarization axis of said polarizer is substantially perpendicular or parallel to a polarization axis of said another polarizer; and/or
- said ophthalmic device comprises at least an actuator configured for rotating said half-wave plate, said actuator extending from a carrier of said ophthalmic device which is fixed to and at least partially surrounds said half-wave plate, or is laminated on said half-wave plate.

### BRIEF DESCRIPTION OF THE DRAWINGS

The description of the invention now continues with a detailed description of advantageous embodiments given hereinafter by way of nonlimiting example and with reference to the appended drawings. In these drawings:
- Figure 1 is a schematic side view of an ophthalmic device according to the invention, comprising a half-wave plate and a polarizer;
- Figures 2 and 3 are each a schematic front view of the half-wave plate and of the polarizer of the ophthalmic device respectively, the double arrows showing the orientation of a fast axis of the half-wave plate and of a polarization axis of the polarizer respectively, the dashed dotted line showing the orientation of a polarization plane of a polarized beam of light passing through the ophthalmic device at an input of the half-wave plate and of the polarizer respectively;

- Figures 4 and 5 are similar views to Figures 2 and 3, but with the half-wave plate that has been rotated clockwise by about 22,5°;
- Figures 6 and 7 are similar views to Figures 2 and 3, but with the half-wave plate that has been rotated clockwise by about 45°;
- Figure 8 shows the transmittance over the visible spectrum of the ophthalmic device with respect to a polarized component of the polarized beam of light that has been isolated therefrom, for the positions of the half-wave plate illustrated on Figures 2 and 6;
- Figure 9 is similar to Figure 8 but with respect to both the polarized component and a non-polarized component of the polarized beam of light; and
- Figures 10 and 11 illustrate an ophthalmic device according to another embodiment of the invention, in which the half wave plate is sandwiched between the polarizer and a front member, which can be another polarizer.

### DETAILED DESCRIPTION OF EXAMPLE EMBODIMENTS

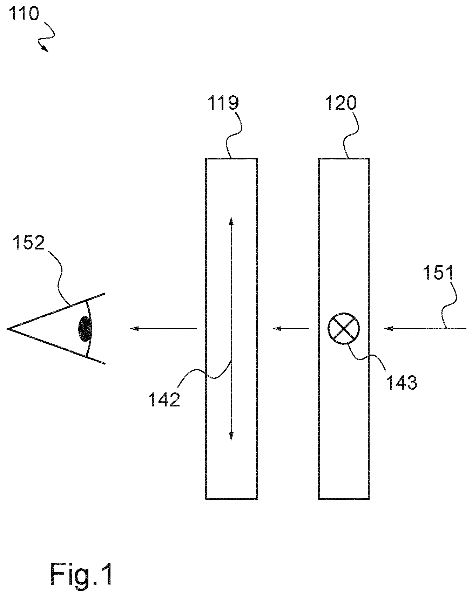

The ophthalmic device 110 illustrated on Figure 1 comprises a polarizer 119 and a half-wave plate 120 that is rotatable with respect to the polarizer 119.

The ophthalmic device 110 has a conventional wearing position in which the eye 152 of a user of the ophthalmic device 110 is situated opposite the polarizer 119, as shown on Figure 1.

Accordingly, a polarized beam of light 151 coming from the environment observed by the user and propagating towards its eye 152 successively meets the half-wave plate 120 and then the polarizer 119.

The polarizer 119 is situated closest to the eye 152 than is the half-wave plate 120 and is thus referred to as the "rear" polarizer 119.

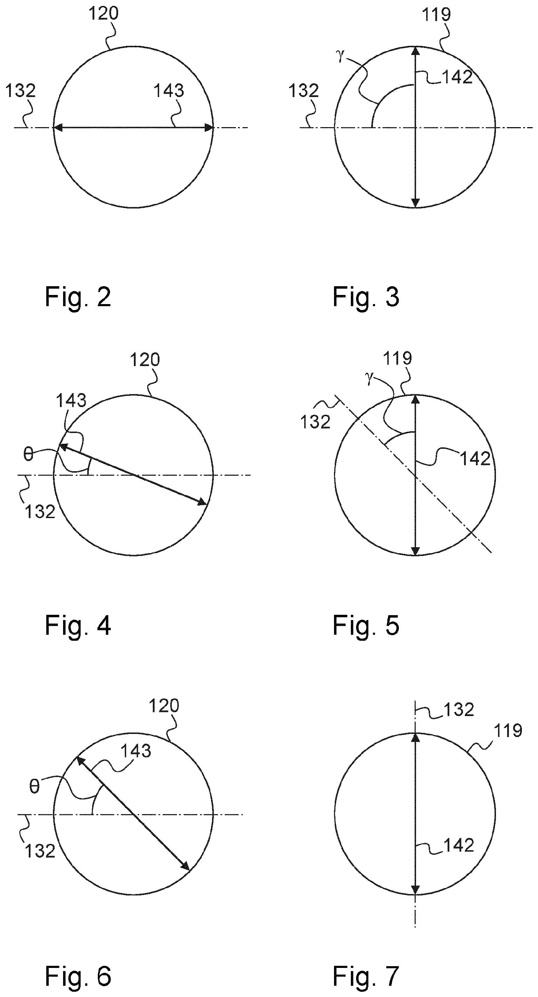

The polarized beam of light 151 has a polarization plane 132, that is schematically represented by a dashed dotted line on Figures 2 to 7.

The polarized beam of light 151 is here horizontally polarized.

The rear polarizer 119 has a polarization axis 142 and the half-wave plate 120 has a fast axis 143.

On Figure 1, the rear polarizer 119 is in a respective predetermined position in which its polarization axis 142 is substantially vertically oriented, and the half-wave plate 120 is in a respective predetermined position in which its fast axis 143 is substantially horizontally oriented.

The half-wave plate 120 is configured to rotate the polarization plane 132 of the polarized beam of light 151 by an angle that is twice the angle between the polarization plane 132 of the beam of light 151 at the input of the half-wave plate 120 and a fast axis 143 of the half-wave plate 120.

By rotating the half-wave plate 120, it is thus possible to adjust the angle between the polarization plane 132 of the polarized beam of light 151 at the input of the rear polarizer 119 and a polarization axis 142 of the rear polarizer 119.

The rear polarizer 119 then cuts, or in other words filters, the polarized beam of light 151 depending on this angle.

Therefore, by rotating the half-wave plate 120 it is possible to adjust the filtering properties of the ophthalmic device 110 with respect to the polarized beam of light 151.

On Figures 2 to 7, the half-wave plate 120 and the rear polarizer 119 are shown as if the ophthalmic device 110 were in its conventional wearing position.

The dashed dotted line shows the orientation of the polarization plane 132 of the polarized beam of light 151 passing through the ophthalmic device 110, at the input of the half-wave plate 120 and of the rear polarizer 119 respectively.

By passing through the ophthalmic device 110, the polarized beam of light 151 successively meets the half-wave plate 120 and then the rear polarizer 19.

As mentioned above, the polarized beam of light 151 is here substantially horizontally polarized. The orientation of the polarization plane 132 at the input of the half-wave plate 120 is thus here substantially horizontal.

The position of the half-wave plate 120 is here defined by the angle θ between its fast axis 143 and the polarization plane 132.

By rotating the half-wave plate 120, it is possible to set the angle θ between the polarization plane 132 at the input of the half-wave plate 120 and the fast axis 143 of the half-wave plate 120, and thus to set the angle γ between the polarization plane 132 of the beam of light at the input of the rear polarizer 119 and its polarization axis 142.

As mentioned above, the rear polarizer 119 cuts, or in other words filters, the polarized beam of light 151 depending on the angle γ between the polarization plane 132 of the beam of light received from the half-wave plate 120 and the polarization axis 142 of the rear polarizer 119.

On Figure 2, the angle θ is equal to about 0°. In other words, the polarization plane 132 at the input of the half-wave plate 120 and the fast axis 143 of the half-wave plate 120 are substantially parallel to each other. In such a case, the polarization plane 132 will not be rotated by the half-wave plate 120. Thus, the polarization plane 132 at the input of the rear polarizer 119 is substantially perpendicular to its polarization axis 142 (the angle γ is equal to about 90°), as shown on Figure 3. The polarized beam of light 151 is therefore substantially entirely cut, or filtered, by the rear polarizer 119.

On Figure 4, the angle θ is equal to about 22,5°. In such a case, the polarization plane 132 will be rotated by the half-wave plate 120 by an angle equal to about 45°. Thus, the angle γ is equal to about 45°, as shown on Figure 5. The polarized beam of light is therefore partially cut, or filtered, by the rear polarizer 119.

On Figure 6, the angle θ is equal to about 45°. In such a case, the polarization plane 132 will be rotated by the half-wave plate 120 by an angle equal to about 90°. Thus, the polarization plane 132 at the input of the rear polarizer 119 is substantially parallel to its polarization axis 142, as shown on Figure 7. The polarized beam of light 151 is therefore substantially entirely not cut, or not filtered, by the rear polarizer 119.

Here, the filtering properties of the ophthalmic device 110 include its transmittance with respect to the polarized beam of light 151.

The polarized beam of light 151 here comprises a non-polarized component (i.e. a randomly polarized component) and a polarized component having the polarization plane 132. Such a polarized beam of light 151 may for instance result from a beam of sunlight reflected by a snow-covered surface in the environment of the user of the ophthalmic device 110.

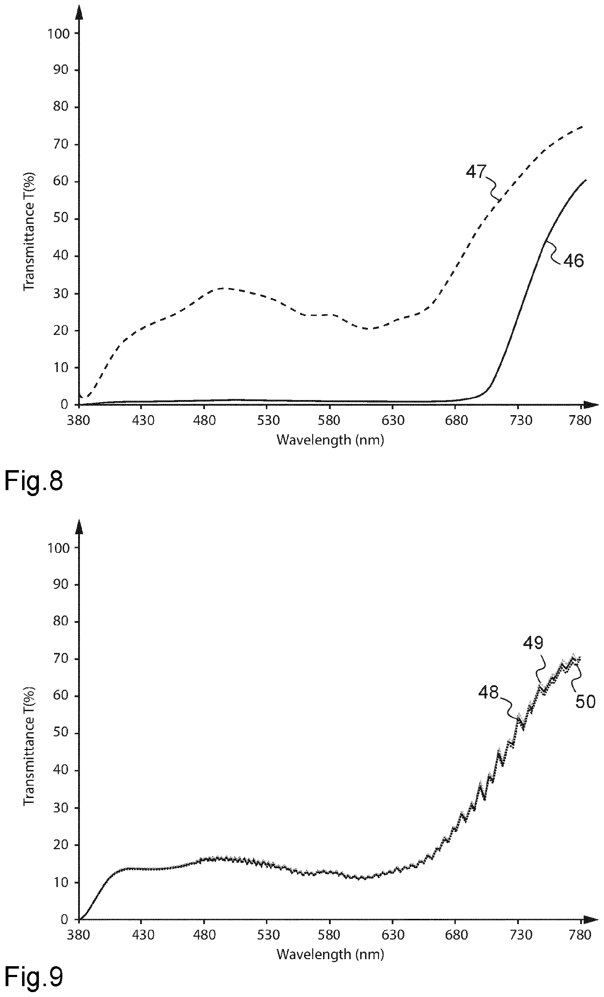

Figure 8 shows the transmittance over the visible spectrum of the ophthalmic device 110 with respect to the polarized component that has been isolated from the polarized beam of light 151 (i.e. not including the non-polarized component); and Figure 9 shows the transmittance of the ophthalmic device 110 with respect to all the components of the polarized beam of light 151, including in particular the polarized component and the non-polarized component, that is to say the overall transmittance.

Measures of the transmittance were made using a *Lambda 900* spectrophotometer from PerkinElmer. The polarized beam of light 151 was simulated based on illuminant D65 as defined by CIE standard ISO 10526:1999/CIE S005/E-1998. The rear polarizer 119 included a Xperio^{®} *UV Grey 3* polarized lens from ESSILOR. The half-wave plate 120 included a APHW92-003-280NM-PC Halfwave retarder from American Polarizers, Inc.

On Figure 8, the full line 46 corresponds to when the half-wave plate 120 is in the position illustrated on Figure 2 and the dashed line 47 corresponds to when the half-wave plate 120 is in the position illustrated on Figure 6.

The full line 46 and the dashed line 47 thus show respectively the minimum and the maximum transmittances that may be obtained with the ophthalmic device 110. The minimum transmittance is here defined as a TvD65 of about 0% and the maximum transmittance is defined as a TvD65 of about 25%. Any intermediary position of the half-wave plate 120, such as the position illustrated on Figure 4, would result in a transmittance comprised between the full line 46 and the dashed line 47. In other words, the transmittance of the ophthalmic device 110 with respect to the polarized component is adjustable on a predetermined range that is here from about 0% to about 25%.

On Figure 9, the lines 48, 49 and 50 corresponds to the position of the half-wave plate 120 illustrated on Figures 2, 4 and 6 respectively.

As can be seen, the lines 48, 49 and 50 are substantially superimposed, meaning that the overall transmittance does not change substantially by rotating the half-wave plate 20.

Indeed, the ophthalmic device 110 is able to filter only the polarized component and substantially not the non-polarized component, so that by rotating the half-wave plate 120 the polarized component will be more or less cut from the polarized beam of light but the non-polarized component will substantially not be cut, so that the overall transmittance of the ophthalmic device 110 with respect to the polarized beam of light will substantially not change by rotating the half-wave plate 120.

In the above described embodiment, the ophthalmic device 110 is configured such that the half-wave plate 120 may be rotated on a range of angles of 45° that is from 90° (Figure 2) to 45° (Figure 6) between the fast axis 143 of the half-wave plate 120 and the polarization axis 142 of the rear polarizer 119.

In a variant that is not illustrated, the ophthalmic device is configured such that the half-wave plate may be rotated on a range of angles of 45° that is from 0° to 45° between the fast axis of the half-wave plate and the polarization axis of the rear polarizer.

In another variant that is not illustrated, the transmittance of the ophthalmic device 110 is adjustable on a predetermined range of TvD65 that is different from about 0% to about 25%, for instance the predetermined range of TvD65 is from about 0% to about 50%, or 70%. Such a maximum transmittance of 70% may be obtained for instance with a rear polarizer including a Xperio^{®} *UV Grey 2* polarized lens from ESSILOR.

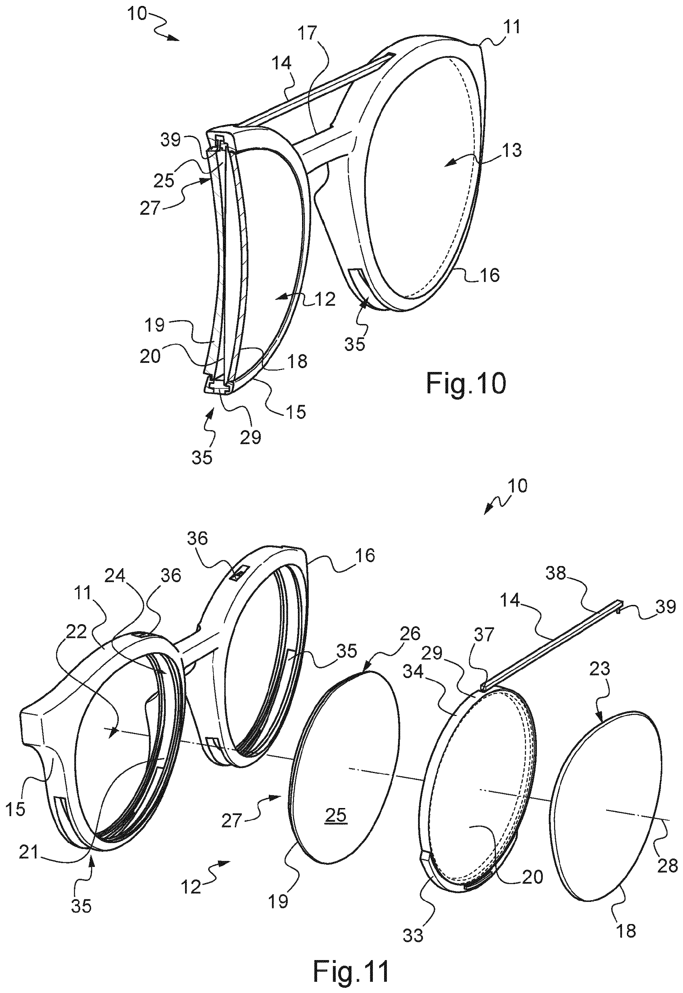

Figures 10 and 11 illustrate an ophthalmic device 10 according to another embodiment of the invention, in which the half wave plate is sandwiched between the polarizer and a front member, which can be another polariser.

The same reference numbers are used for the corresponding elements between the ophthalmic devices 110 and 10, but reduced by 100 for the latter.

The ophthalmic device 10 illustrated on Figures 10 and 11 comprises a spectacle frame 11, a first eyeglass 12 and a second eyeglass 13.

The frame 11 has here a conventional wearing position in which the first eyeglass 12 and the second eyeglass 13 are substantially horizontally aligned and are each generally vertically oriented.

The frame 11 comprises a first bearing portion 15 configured to receive the first eyeglass 12, a second bearing portion 16 configured to receive the second eyeglass 13, and a bridge 17 extending from the first bearing portion 15 to the second bearing portion 16.

The assembly formed by the first bearing portion 15 and the first eyeglass 12 is identical to the assembly formed by the second bearing portion 16 and the second eyeglass 13, except they are arranged symmetrically. The following description of the first bearing portion 15 and the first eyeglass 12 therefore applies *mutatis mutandis* to the second bearing portion 16 and the second eyeglass 13.

The first bearing portion 15 has a generally annular shape and has an inner surface 21 defining an inner space 22 configured to at least partially receive the first eyeglass 12. The first bearing portion 15 here entirely surrounds the first eyeglass 12. The first bearing portion 15 has an outer surface 31 that is opposite to the inner surface 21.

The first eyeglass 12 is configured to have adjustable filtering properties.

Since it is desirable here that the first eyeglass 12 and the second eyeglass 13 have the same filtering properties at the same time, the ophthalmic device 10 comprises a synchronizing system configured to synchronize their filtering properties. The synchronizing system comprises here a synchronization member 14 connected to the bearing portions 15 and 16. This will be described in more details later.

The first eyeglass 12 comprises a front member 18, a rear polarizer 19 which is fixed relative to the front member 18, and a half-wave plate 20 located between the front member 18 and the rear polarizer 19.

As mentioned above, the front member 18 may be a front polarizer and may thus have polarizing properties.

The front member 18 and the rear polarizer 19 are each fixedly mounted in the first bearing portion 15 of the frame 11. In particular, the front member 18 and the rear polarizer 19 are not free to rotate with respect to the first bearing portion 15.

In contrast, the half-wave plate 20 is here mounted in the first bearing portion 15 so as to be free to rotate about an axial direction 28 according to which the front member 18, the half-wave plate 20 and the rear polarizer 19 are aligned.

The half-wave plate 20 is thus rotationally mounted in the frame 11 and is rotatable in particular with respect to the rear polarizer 19.

The half-wave plate 20 is thus also rotatable in particular with respect to the front member 18.

Generally speaking, in the present memorandum the "rear" and "front" terms are to be understood as meaning closest to the eye of the user and remote to the eye of the user respectively.

Here, the front member 18 is situated remote to the eye of a wearer (not shown) of the ophthalmic device 10 and is thus referred to as "front", while the rear polarizer 19 is situated close to the eye of a wearer of the ophthalmic device 10 and is thus referred to as "rear".

In Figures 10 and 11, the eye of the user (not shown) is situated to the left of the frame 11.

The front member 18 is here integrally formed with a disc-shaped element that has a substantially constant thickness. The front member 18 has a peripheral side surface 23 that is configured to cooperate with the inner surface 21 of the first bearing portion 15 for fixedly mounting the front member 18 in the first bearing portion 15, here by snap-fitting.

The disc-shaped element forming the front member 18 here does not have corrective properties.

The rear polarizer 19 is here integrally formed with an ophthalmic lens of the ophthalmic device 10. The rear polarizer 19 has a peripheral side surface 26 that is configured to cooperate with the inner surface 21 of the first bearing portion 15 for fixedly mounting the rear polarizer 19 in the first bearing portion 15.

The ophthalmic lens forming the rear polarizer 19 here has corrective optical properties. In particular, the rear polarizer 19 may have a front surface 25 and a rear surface 27, situated on either sides of the peripheral side surface 26, at least one of which is curved such that the rear polarizer 19 has a varying thickness.

The half-wave plate 20 comprises here a polycarbonate film of 60 µm thickness configured to provide a half-wave plate function. The half-wave plate 20 here further comprises a cellulose triacetate (TAC) film of 190 µm thickness on which the polycarbonate film is laminated.

The first eyeglass 12 comprises here a carrier 29 that at least partially surrounds the half-wave plate 20 and to which is fixed the half-wave plate 20. The assembly formed by the carrier 29 and the half-wave plate 20 is here generally disc-shaped.

Here, the half-wave plate 20 is flat, that is to say not curved. In variant, the half-wave plate 20 may be curved, for instance for matching the curvature of the front surface 25 of the rear polarizer 19, this being favourable to compactness of the ophthalmic device.

The carrier 29 is mounted in the first bearing portion 15 so as to be free to rotate about the axial direction 28, thereby rotating the half-wave plate 20.

The carrier 29 here comprises a ring 34 of generally circular shape that here entirely surrounds the half-wave plate 20.

The carrier 29 further comprises an elongated rib 33 that projects externally from the ring 34, that is to say in a direction opposite to the half-wave plate 20. The rib 33 here projects radially from the generally circular ring 34 and extends longitudinally parallel to the ring 34.

The inner surface 21 of the first bearing portion 15 has an annular recess 24 of generally circular shape configured to receive at least a portion - here a peripheral portion - of the carrier 29 and to form a sliding guide for the carrier 29 when the latter is rotated in the first bearing portion 15.

The first bearing portion 15 further comprises an elongated opening 35 that surrounds the inner space 22, leading both through the inner surface 21, into the recess 24, and through the outer surface 31.

The elongated opening 35 is here generally located to the side that is closest to the mouth of the wearer of the ophthalmic device 10.

The elongated opening 35 is configured to receive the elongated rib 33 and to form a sliding guide for the rib 33 when the carrier 29 is rotated. The opening 35 is further configured such that the elongated rib 33 is accessible to the wearer of the ophthalmic device 10, the rib 33 thereby forming an actuator that extends from the carrier 29 and that is configured for rotating the half-wave plate 20.

The rib 33 and the opening 35 are further configured to define predetermined angular positions of the carrier 29 and thus of the half-wave plate 20. More specifically, the carrier 29, together with the half-wave plate 20, may be rotated from an extreme position in which the rib 33 abuts against an end of the elongated opening 35 and another extreme position in which the rib 33 abuts against the opposite end of the elongated opening 35, said ends being longitudinally opposite to each other.

Here, the length of the elongated opening 35 is such that the angular range by which the carrier 29 and the half-wave plate 20 may be rotated is about 30°. Here, the ophthalmic device 10 is configured such that an extreme position corresponds to a predetermined position of the fast axis of the half-wave plate 20 that is perpendicular to the polarization axis of the rear polarizer 19 and the other extreme position thus corresponds to another predetermined position of the fast axis that is at an angle of about 90° - 30° = 60° with respect the polarization axis. In a variant, the predetermined position may be different from perpendicular, for instance parallel to the polarization axis, or at any predetermined angle with respect the polarization axis.

The carrier 29 further comprises a notch 37 formed into the ring 34 and extending transversally to the ring 34. The notch 37 is here located to the side that is closest to the forehead of the wearer of the ophthalmic device 10. In other words, the notch 37 is generally situated radially opposite to the rib 33 forming the actuator.

The first bearing portion 15 further comprises a mounting hole 36, that is here located to the side that is closest to the forehead of the wearer of the ophthalmic device 10.

The mounting hole 36 and the notch 37 are configured for connecting the synchronization member 14 to the first bearing portion 15 and to its carrier 29; and the corresponding mounting hole 36 and the corresponding notch of the second bearing portion 16 are configured for connecting the synchronization member 14 to the second bearing portion 16 and to the carrier of the second bearing portion 16.

The synchronization member 14 here comprises a bar 38 and two pins 39 situated at a respective ends of the bar 38 and extending transversally to the bar 38.

The mounting hole 36 of the first bearing portion 15 and the corresponding mounting hole 36 of the second bearing portion 16 are configured to form a sliding guide for the bar 38 that is at least partially received in each mounting hole 36.

The bar 38 here extends generally parallel to the bridge 17 and is located closest to the forehead of a wearer of the ophthalmic device 10 than is the bridge 17.

Each pin 39 is configured to fit into the notch 37 of the carrier 29 of a respective of the first and second eyeglasses 12 and 13.

The synchronization member 14 is thereby configured such that a rotating movement of the carrier 29 in the first bearing portion 15 is replicated by the other carrier in the second bearing portion 16, and reciprocally.

It should be noted here that the synchronization member 14 is configured to look like another bridge extending between first and second bearing portions 15 and 16, such that the frame 11 looks like a "double bridge" frame that is a common design in eyewear industry.

It should further be noted that the synchronization member 14 also forms an actuator for rotating the carriers 29 and thus the half-wave plates 20, such that the ribs 33 may be optional.

In a manner similar to the operation of the ophthalmic device 110, it is possible to adjust the filtering properties of the first eyeglass 12 by rotating the half-wave plate 20 according to distinct angles of rotation.

The half-wave plate 20 is thus configured to admit a plurality of positions that are selected by rotating the half-wave plate 20 according to distinct angles of rotation, each corresponding to a respective position.

As explained above in relation to the ophthalmic device 110, the filtering properties of the first eyeglass 12 are defined by the cooperation of the half-wave plate 20 with the rear polarizer 19.

It should be noted that in the ophthalmic device 10, the front member 18, or front polarizer, is fixed relative to the rear polarizer 19 and is positioned such that the half-wave plate 20 is located between the rear polarizer 19 and the front polarizer. In this manner, any non-polarized component of the polarized beam of light may be eliminated. In such a variant, the polarization axis of the second polarizer may be substantially perpendicular or parallel to the polarization axis of the rear polarizer 19.

In a variant that is not illustrated, the length of the elongated opening such as 35 may be such that the angular range by which the carrier 29 and the half-wave plate 20 may be rotated is different from 30°, and is for instance at least of 45°.

In a variant that is not illustrated, the rear polarizer is rotationally mounted in the frame and is thus rotatable in particular with respect to the half-wave plate. By rotating the polarizer in such a variant, it is possible to further adjust the angle between the polarization plane of the polarized beam of light at the input of the polarizer and the polarization axis of the polarizer. It should be noted that if the polarizer is rotated by a predetermined angle, the angle between the polarization plane of the polarized beam of light at the input of the polarizer and the polarization axis of the polarizer will be reduced or enhanced by this predetermined angle. Therefore, by rotating the polarizer it is possible to twice more finely adjust the filtering properties of the ophthalmic device with respect to the polarized beam of light than with the half-wave plate. In such a variant, the polarizer may be a polarizing film that is mounted in the frame using a ring similar to ring 34 used for the half-wave plate 20.

In a variant that is not illustrated, the carrier of the half-wave plate may have a shape that is different from generally circular. In such case, the annular recess may be configured such that no part of the peripheral portion of the carrier escapes from the annular recess regardless of the angle by which the carrier is rotated. In particular, the minimal depth required for the annular recess at any location thereof may be determined. In this respect, it should be noted that such minimal depth not only depends on the shape of the carrier but also on the range of rotation angles required for the carrier. In particular, the smaller the range of rotation angles, the smaller the minimal depth required. Here, since it is sufficient that the range of angles of rotation of the carrier be of 45°, the minimal depth of the annular recess may be relatively small, which is favourable to the compactness of the mounting portion.

As previously mentioned, in the above embodiment in which the ophthalmic device 10 comprises two eyeglasses 12 and 13 each mounted in a respective bearing portion 15 and 16, the synchronization member 14 ensures that a rotating movement of the carrier 29 in the first bearing portion 15 is replicated by the other carrier in the second bearing portion 16 and reciprocally. Therefore, the synchronization member 14 is configured to synchronize the rotation of the respective half-wave plates 20. Accordingly, the angle of rotation of the polarization plane of the beam of light passing through the first eyeglass 12 is similar to the angle of rotation of the polarization plane of the beam of light passing through the second eyeglass 13.

In another variant that is not illustrated, the ring 34 is replaced by a generally circular disc-shaped element onto which the film configured to provide the half-wave plate function is laminated, and the notch 37 is replaced by a hole extending radially from a peripheral side 40 of the generally circular disc-shaped element.

In variants that are not illustrated:
- the range of angles for rotating the half-wave plate is at least of 45°, for instance 50°, 65° or 90°;
- the range of angles for rotating the half-wave plate is less than 45°, for instance 30° or 25°;
- the frame is different from a spectacles frame, for instance a binocular frame; or the frame is different from a frame designed for having two eyeglasses, for instance a frame designed for having only one eyeglass, such as a telescope frame, the ophthalmic device being thus devoid of a synchronizing system;
- only one of the first and second eyeglasses has adjustable filtering properties;
- the first and/or second bearing portions partially surrounds the eyeglass;
- the carrier may have at least two radially opposite portions each configured to cooperate with the inner surface of the bearing portion, and the inner surface of the bearing portion may have a shape including at least two radially opposite arcuate portions each configured to cooperate with a respective of the radially opposite portions of the carrier to form a sliding guide for the carrier;
- the rear polarizer is different from a polarizer that is integrally formed with disc-shaped element/ophthalmic lens, for instance the rear polarizer comprises a film configured to provide a polarizing function that is laminated on a disc-shaped element/ophthalmic lens;
- the front member is devoid of polarizing properties; and/or
- the ophthalmic lens is not associated to the rear polarizer but to the front member;

It should be noted more generally that the invention is not limited to the examples described and represented.

## Claims

1. Ophthalmic device having adjustable filtering properties, comprising at least one polarizer (19; 119) and at least one half-wave plate (20; 120) that is rotatable with respect to said polarizer (19; 119) to thereby adjust said filtering properties for a polarized beam of light that successively meets said half-wave plate (20; 120) and then said polarizer (19; 119).

2. Ophthalmic device according to claim 1, wherein said polarizer (19) is rotatable with respect to said half-wave plate (20).

3. Ophthalmic device according to any one of claims 1 or 2, wherein said half-wave plate (120) can be rotated at least on a range of angles of 45°.

4. Ophthalmic device according to claim 3, wherein said range of angles of 45° is from 0° to 45° or from 90° to 45° between a fast axis (143) of said half-wave plate (120) and a polarization axis (142) of said polarizer (119).

5. Ophthalmic device according to claim 4, wherein said filtering properties include a transmittance of said ophthalmic device (10; 110) with respect to a polarized component of said polarized beam of light, said transmittance being adjustable on a predetermined range.

6. Ophthalmic device according to any one of claims 1 to 5, wherein it comprises at least one ophthalmic lens on which is fixed, or which is integrally formed with, said polarizer (19).

7. Ophthalmic device according to claim 6, wherein said at least one ophthalmic lens has corrective optical properties.

8. Ophthalmic device according to claim 1, wherein it comprises at least a frame (11) in which is fixedly mounted said polarizer (19) and in which is rotationally mounted said half-wave plate (20).

9. Ophthalmic device according to claim 8, wherein said frame (11) has a conventional wearing position and the polarization axis of said polarizer (19) is oriented generally vertically when said frame (11) is in said conventional wearing position.

10. Ophthalmic device according to any one of claims 8 or 9, wherein said frame (11) is a spectacle frame having two bearing portions (15, 16) into each of which is at least partially mounted one said polarizer (19) and one said half-wave plate (20).

11. Ophthalmic device according to claim 10, wherein said spectacle frame (11) comprises a synchronization member (14) connected to said two bearing portions (15, 16) and configured such that a rotating movement of said half-wave plate (20) in a first of said bearing portions (15, 16) is replicated by said half-wave plate in a second of said bearing portions (16, 15), and reciprocally.

12. Ophthalmic device according to any one of claims 1 to 11, wherein it comprises at least another polarizer (18) which is fixed relative to said polarizer (19) and that is positioned such that said half-wave plate (20) is located between said polarizer (19) and said another polarizer (18).

13. Ophthalmic device according to claim 12, wherein a polarization axis of said polarizer (19) is substantially perpendicular or parallel to a polarization axis of said another polarizer (18).

14. Ophthalmic device according to any one of claims 1 to 13, wherein it comprises at least an actuator (33; 14) configured for rotating said half-wave plate (20), said actuator (33; 14) extending from a carrier (29) of said ophthalmic device (10) which is fixed to and at least partially surrounds said half-wave plate (20), or is laminated on said half-wave plate.

## Patentansprüche

1. Ophthalmische Vorrichtung mit einstellbaren Filtereigenschaften, umfassend mindestens einen Polarisator (19; 119) und mindestens eine Halbwellenplatte (20; 120), die in Bezug auf den Polarisator (19; 119) drehbar ist, um dadurch die Filtereigenschaften für einen polarisierten Lichtstrahl einzustellen, der nacheinander auf die Halbwellenplatte (20; 120) und dann auf den Polarisator (19; 119) trifft.

2. Ophthalmische Vorrichtung nach Anspruch 1, wobei der Polarisator (19) in Bezug auf die Halbwellenplatte (20) drehbar ist.

3. Ophthalmische Vorrichtung nach einem der Ansprüche 1 oder 2, wobei die Halbwellenplatte (120) mindestens um einen Winkelbereich von 45° gedreht werden kann.

4. Ophthalmische Vorrichtung nach Anspruch 3, wobei der Winkelbereich von 45° von 0° bis 45° oder von 90° bis 45° zwischen einer schnellen Achse (143) der Halbwellenplatte (120) und einer Polarisationsachse (142) des Polarisators (119) beträgt.

5. Ophthalmische Vorrichtung nach Anspruch 4, wobei die Filtereigenschaften eine Transmission der ophthalmischen Vorrichtung (10; 110) in Bezug auf eine polarisierte Komponente des polarisierten Lichtstrahls beinhalten, wobei die Transmission in einem vorbestimmten Bereich einstellbar ist.

6. Ophthalmische Vorrichtung nach einem der Ansprüche 1 bis 5, wobei sie mindestens eine ophthalmische Linse umfasst, an der der Polarisator (19) fixiert ist oder die einteilig mit diesem ausgebildet ist.

7. Ophthalmische Vorrichtung nach Anspruch 6, wobei die mindestens eine ophthalmische Linse korrigierende optische Eigenschaften aufweist.

8. Ophthalmische Vorrichtung nach Anspruch 1, wobei sie mindestens einen Rahmen (11) umfasst, in dem der Polarisator (19) fest montiert ist und in dem die Halbwellenplatte (20) drehbar montiert ist.

9. Ophthalmische Vorrichtung nach Anspruch 8, wobei der Rahmen (11) eine übliche Trageposition aufweist und die Polarisationsachse des Polarisators (19) allgemein vertikal ausgerichtet ist, wenn sich der Rahmen (11) in der üblichen Trageposition befindet.

10. Ophthalmische Vorrichtung nach einem der Ansprüche 8 oder 9, wobei der Rahmen (11) ein Brillenrahmen ist, der zwei Lagerabschnitte (15, 16) aufweist, in die jeweils ein Polarisator (19) und eine Halbwellenplatte (20) zumindest teilweise montiert sind.

11. Ophthalmische Vorrichtung nach Anspruch 10, wobei der Brillenrahmen (11) ein Synchronisationselement (14) umfasst, das mit den zwei Lagerabschnitten (15, 16) verbunden und so ausgelegt ist, dass eine Drehbewegung der Halbwellenplatte (20) in einem ersten der Lagerabschnitte (15, 16) durch die Halbwellenplatte in einem zweiten der Lagerabschnitte (16, 15) repliziert wird, und umgekehrt.

12. Ophthalmische Vorrichtung nach einem der Ansprüche 1 bis 11, wobei sie mindestens einen anderen Polarisator (18) umfasst, der relativ zu dem Polarisator (19) fixiert ist und der so positioniert ist, dass sich die Halbwellenplatte (20) zwischen dem Polarisator (19) und dem anderen Polarisator (18) befindet.

13. Ophthalmische Vorrichtung nach Anspruch 12, wobei eine Polarisationsachse des Polarisators (19) im Wesentlichen senkrecht oder parallel zu einer Polarisationsachse des anderen Polarisators (18) ist.

14. Ophthalmische Vorrichtung nach einem der Ansprüche 1 bis 13, wobei sie mindestens einen Aktor (33; 14) umfasst, der zum Drehen der Halbwellenplatte (20) ausgelegt ist, wobei sich der Aktor (33; 14) von einem Träger (29) der ophthalmischen Vorrichtung (10) aus erstreckt, der an der Halbwellenplatte (20) fixiert ist und diese zumindest teilweise umgibt, oder auf die Halbwellenplatte laminiert ist.

## Revendications

1. Dispositif ophtalmique à propriétés de filtrage réglables, comprenant au moins un polariseur (19 ; 119) et au moins une lame demi-onde (20 ; 120) pouvant tourner par rapport audit polariseur (19 ; 119) pour régler ainsi lesdites propriétés de filtrage pour un faisceau de lumière polarisé qui rencontre successivement ladite lame demi-onde (20 ; 120) puis ledit polariseur (19 ; 119).

2. Dispositif ophtalmique selon la revendication 1, dans lequel ledit polariseur (19) peut tourner par rapport à ladite lame demi-onde (20).

3. Dispositif ophtalmique selon l'une quelconque des revendications 1 ou 2, dans lequel ladite lame demi-onde (120) peut tourner au moins sur une plage d'angles de 45°.

4. Dispositif ophtalmique selon la revendication 3, dans lequel ladite plage d'angles de 45° est de 0° à 45° ou de 90° à 45° entre un axe rapide (143) de ladite lame demi-onde (120) et un axe de polarisation (142) dudit polariseur (119).

5. Dispositif ophtalmique selon la revendication 4, dans lequel lesdites propriétés de filtrage comprennent une transmission dudit dispositif ophtalmique (10 ; 110) par rapport à une composante polarisée dudit faisceau de lumière polarisé, ladite transmission étant réglable sur une plage prédéterminée.

6. Dispositif ophtalmique selon l'une quelconque des revendications 1 à 5, dans lequel il comprend au moins une lentille ophtalmique sur laquelle est fixé ledit polariseur (19), ou qui est formée d'une seule pièce, avec celui-ci.

7. Dispositif ophtalmique selon la revendication 6, dans lequel ladite au moins une lentille ophtalmique présente des propriétés optiques correctrices.

8. Dispositif ophtalmique selon la revendication 1, dans lequel il comprend au moins une monture (11) dans laquelle est montée fixe ledit polariseur (19) et dans laquelle est montée en rotation ladite lame demi-onde (20).

9. Dispositif ophtalmique selon la revendication 8, dans lequel ladite monture (11) présente une position de port classique et l'axe de polarisation dudit polariseur (19) est orienté généralement verticalement lorsque ladite monture (11) est dans ladite position de port classique.

10. Dispositif ophtalmique selon l'une quelconque des revendications 8 ou 9, dans lequel ladite monture (11) est une monture de lunettes présentant deux parties d'appui (15, 16) dans chacune desquelles sont au moins partiellement montés ledit polariseur (19) et ladite lame demi-onde (20).

11. Dispositif ophtalmique selon la revendication 10, dans lequel ladite monture de lunettes (11) comprend un organe de synchronisation (14) relié auxdites deux parties d'appui (15, 16) et configuré de telle sorte qu'un mouvement de rotation de ladite lame demi-onde (20) dans une première desdites parties d'appui (15, 16) soit répliqué par ladite lame demi-onde dans une seconde desdites parties d'appui (16, 15), et de manière réciproque.

12. Dispositif ophtalmique selon l'une quelconque des revendications 1 à 11, dans lequel il comprend au moins un autre polariseur (18) fixe par rapport audit polariseur (19) et positionné de sorte que ladite lame demi-onde (20) soit située entre ledit polariseur (19) et ledit autre polariseur (18).

13. Dispositif ophtalmique selon la revendication 12, dans lequel un axe de polarisation dudit polariseur (19) est sensiblement perpendiculaire ou parallèle à un axe de polarisation dudit autre polariseur (18).

14. Dispositif ophtalmique selon l'une quelconque des revendications 1 à 13, dans lequel il comprend au moins un actionneur (33 ; 14) conçu pour faire tourner ladite lame demi-onde (20), ledit actionneur (33 ; 14) s'étendant depuis un support (29) dudit dispositif ophtalmique (10) qui est fixé à et entoure au moins partiellement ladite lame demi-onde (20), ou est stratifié sur ladite lame demi-onde.
